# EUROPEAN PATENT APPLICATION

(11) **EP 0 546 744 A2**
(43) Date of publication of application: **16.06.1993**
(21) Application number: 92310905.2
(22) Date of filing: 30.11.1992
(51) Int. Cl.: B01J 21/16, B01J 23/40, B01J 35/04, B01D 53/36, B01J 29/02

(54) **Support for a catalytic material**

(30) Priority: 28.11.1991 GB 9125293
(71) Applicant: ROVER GROUP LIMITED, Bickenhill Birmingham B37 7HQ (GB); UNIVERSITY OF WARWICK, Coventry, Warwickshire CV4 7AL (GB)
(72) Inventor: Bhattacharya, Ashok, Dr., Moseley, Birmingham B13 9RY (GB)
(74) Representative: Bannerman, David Gardner

(57) **Abstract**

The invention relates to a support for a catalytic material comprising mica in sheet form in which the individual anions of the mica are linked chemically by silicon atoms. It also relates to use of the support coated with a catalytic material in a method of purifying vehicle exhaust gases.

## Description

This invention relates to a support for a catalytic material, particularly but not exclusively to a support for a catalytic material for use in purifying vehicle exhaust gases.

Conventionally, a support for catalytic materials for purifying vehicle gases comprises a,cylindrical honeycomb structure of a ceramic material. These honeycomb supports are, however, heavy and expensive.

U.S. Patent Serial No.4,367,163 (Pinnavaia et al) disclosed intercalated clay compositions comprising complexes in which the clay layers are connected via intervening pillars of silica, that is, silica dioxide. Such material is said to be useful as a catalytic support material. European Patent Application Publication No.0145061 (Shell) discloses an improved complex in which the silicon dioxide pillars have at least two layers of silicon atoms.

Both of the above documents refer to De la Cruz et al., Proceedings of the International Clay Conference, pp.705-710, 1972, 23-30 June, Madrid, Spain stating that they have shown modified montmorillonite and vermiculite substrates which have been treated with trimethylchlorosilane or dimethyldichlorosilane, with the indication given that the organochlorosilane react with interstitial water in the clay substrate to form silanol groups therein. However, hydrolysis of these organosilane reactants does not result in the formation of silica or hydrated silica structures in the clay. Moreover, it has been postulated that if the organosilanol impregnated clay is heated, the silanol compounds would react to form low molecular weight siloxane compounds which are not attached to the interlayer framework of the clay and could be eliminated from the clay substrate.

Thus the use of an organosilane as an intercalating agent for stabilising clay is said to be disadvantageous.

The above prior art documents all refer to clay and none discloses the possible use of mica, which it not a clay, as a catalytic support material.

Mica is a naturally-occurring complex aluminium silicate. The molecular structure of natural mica is lamellar, with the silicate anions forming infinite thin sheets loosely bound together by the metal cations lying between the sheets. Natural mica is therefore readily cleavable in the planes in which the silicate anions lie. It is already known to link the lamellar anions together chemically by treating mica by impregnating it with an organic silane and then decomposing the silane, e.g. by heating. As a result, the individual lamellar anions become chemically bonded together by silicon atoms. The resulting structure is no longer readily cleavable.

The lamellar anions of naturally-occurring mica are permeable to gas molecules in a direction transverse to the planes in which they lie. This is a consequence of the open chemical structure of these anions. This permeability is retained even after cross-linking by treatment with a silane as outlined above.

According to one aspect of the invention, a support for a catalytic material comprises mica in sheet form and in which the individual anions are chemically linked by silicon atoms.

Depending on the exact method of silane treatment, the resulting cross-linked structure may be very stiff, if there is a high degree of cross-linking, or it may be flexible, if there is a lesser degree of cross-linking, so that it can be rolled up.

In the present invention the sheet is preferably rolled spirally into a cylindrical shape (like a swiss roll), so that the exhaust gas or other material to be treated can flow through the support in the axial direction, passing between the adjacent turns of the spiral.

The catalytic material, which may in the case of an exhaust gas catalyst be based on platinum group metals or on non-precious metals may be coated onto either one or both sides of the mica sheet, but preferably both sides. The permeability to gas in directions transverse to the axis of the cylinder enables the exhaust gases to penetrate transversely through the support, assisting contact between the gases and the catalytic material.

The rolled mica sheet is preferably installed in a housing having inlets and outlets for the material (e.g. exhaust gas) to be treated.

## Claims

1. A support for a catalytic material comprising mica in sheet form and in which the individual anions are chemically linked by silicon atoms.

2. A support according to claim 1, wherein the sheet is rolled spirally into a cylindrical shape, so that material to be treated in the presence of the catalyst can flow through the support in the axial direction, passing between adjacent turns of the spiral.

3. A catalyst comprising a support according to either preceding claim, wherein both sides of the mica sheet have been coated with a catalytic material.

4. A catalyst according to claim 3, wherein the catalytic material is a platinum group metal or non-precious metal.

5. A method of purifying vehicle exhaust gases, comprising passing the exhaust gases through a catalyst according to claim 4.
